# EUROPEAN PATENT APPLICATION

(11) **EP 4 712 408 A1**
(43) Date of publication of application: **18.03.2026**
(21) Application number: 24806851.2
(22) Date of filing: 13.03.2024
(51) Int. Cl.: H04L 9/14, H04L 9/08

(54) **COMMUNICATION METHOD, COMMUNICATION TERMINAL, AND COMMUNICATION SYSTEM**

(30) Priority: 12.05.2023 JP 2023079305
(71) Applicant: Panasonic Intellectual Property Management Co., Ltd., Kadoma-shi, Osaka 571-0057 (JP)
(72) Inventor: YAMAMOTO, Masaya, Kadoma-shi, Osaka 571-0057 (JP); UNAGAMI, Yuji, Kadoma-shi, Osaka 571-0057 (JP)
(74) Representative: Grünecker Patent- und Rechtsanwälte PartG mbB
(86) International application number: PCT/JP2024/009890
(87) International publication number: WO 2024/236896

(57) **Abstract**

The communication method is a communication method for a communication terminal including a storage that stores a first certificate that has been given in advance, the communication method including: performing first authentication communication with a first device by using the first certificate (S10); obtaining a second certificate through the first authentication communication, the second certificate being different from the first certificate (S20); and performing second authentication communication with a second device by using the second certificate that has been obtained, the second device being different from the first device (S30), wherein the first certificate stores a first public key and a first signature each generated using a first private key cryptography method, and the second certificate stores a second public key and a second signature each generated using a second private key cryptography method different from the first private key cryptography method.

## Description

### [Technical Field]

The present disclosure relates to a communication method, a communication terminal, and a communication system.

### [Background Art]

Conventionally, when an Internet of Things (IoT) device or the like communicates with other devices, a certificate (digital certificate) has been used. For example, Patent Literature (PTL) 1 discloses a method for issuing a certificate that includes both the public key of a quantum vulnerable cryptosystem (such as an RSA cryptography) and the public key of a quantum resistant cryptosystem.

### [Citation List]

### [Patent Literature]

[PTL 1] Japanese Patent No. 6644894

### [Summary of Invention]

### [Technical Problem]

Incidentally, in recent years, there has been an increasing number of cases in which two types of certificates are used when communicating with other devices in IoT devices and the like. However, the technology for communicating using two types of certificates can be improved upon. In addition, PTL 1 does not disclose communication using two types of certificates.

Therefore, the present disclosure provides a communication method, a communication terminal, and a communication system that can improve upon the above related art when communicating using two types of certificates.

### [Solution to Problem]

The communication method according to one aspect of the present disclosure is a communication method for a communication terminal including a storage that stores a first certificate that has been given in advance, the communication method including: performing first authentication communication with a first device by using the first certificate; obtaining a second certificate through the first authentication communication, the second certificate being different from the first certificate; and performing second authentication communication with a second device by using the second certificate that has been obtained, the second device being different from the first device, wherein the first certificate stores a first public key and a first signature each generated using a first private key cryptography method, and the second certificate stores a second public key and a second signature each generated using a second private key cryptography method different from the first private key cryptography method.

The communication terminal according to one aspect of the present disclosure is a communication terminal including: a storage that stores a first certificate that has been given to the communication terminal in advance; a first authentication communicator that performs first authentication communication with a first device by using the first certificate; an obtainer that obtains a second certificate through the first authentication communication, the second certificate being different from the first certificate; and a second authentication communicator that performs second authentication communication with a second device by using the second certificate that has been obtained, the second device being different from the first device, wherein the first certificate stores a first public key and a first signature each generated using a first private key cryptography method, and the second certificate stores a second public key and a second signature each generated using a second private key cryptography method different from the first private key cryptography method.

The communication system according to one aspect of the present disclosure includes: the communication terminal described above; and the first device that, when one of the first private key cryptography method or the second private key cryptography method becomes compromised, performs the first authentication communication using a public key and a signature of the other of the first private key cryptography method or the second private key cryptography method.

### [Advantageous Effects of Invention]

According to one aspect of the present disclosure, communication methods and the like that can be further improved can be realized when communication is performed using two types of certificates.

### [Brief Description of Drawings]

[FIG. 1]

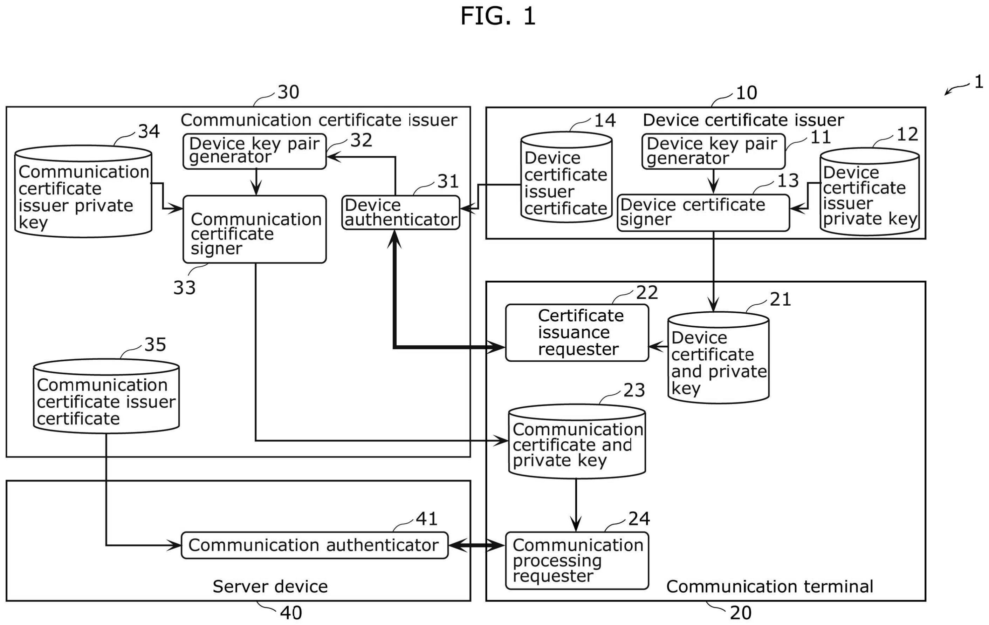

   FIG. 1 is a block diagram showing the functional configuration of a communication system according to Embodiment 1.
[FIG. 2]

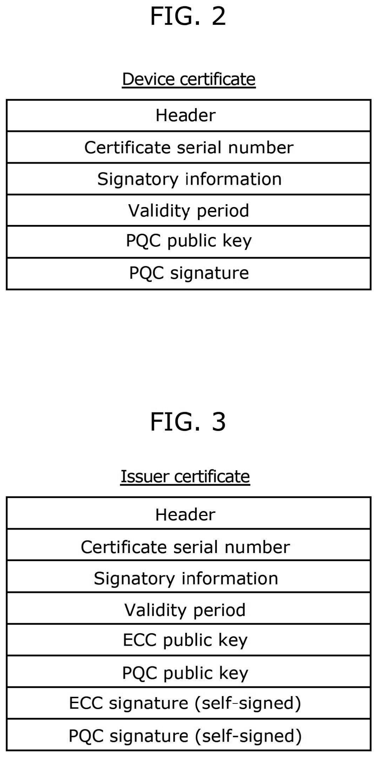

   FIG. 2 is a diagram showing the data structure of the device certificate according to Embodiment 1.
[FIG. 3]
   FIG. 3 is a diagram showing the data structure of the issuer certificate according to Embodiment 1.
[FIG. 4]

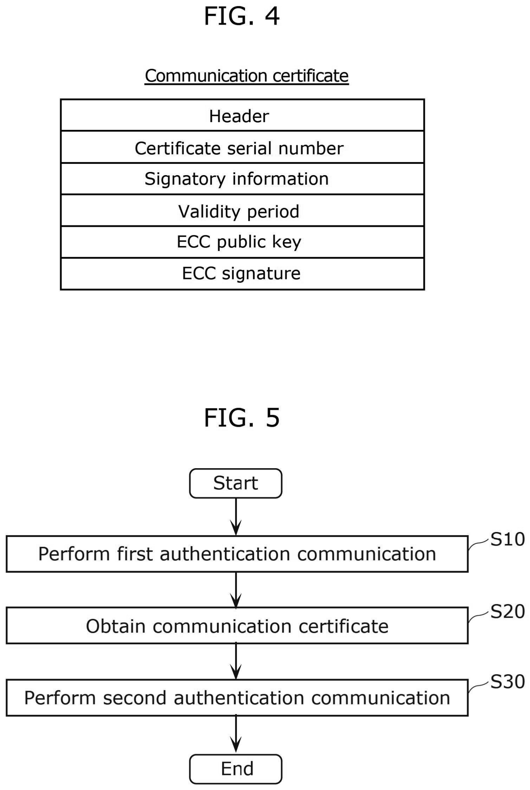

   FIG. 4 is a diagram showing the data structure of the communication certificate according to Embodiment 1.
[FIG. 5]
   FIG. 5 is a flow chart showing the operation of the communication system according to Embodiment 1.
[FIG. 6]

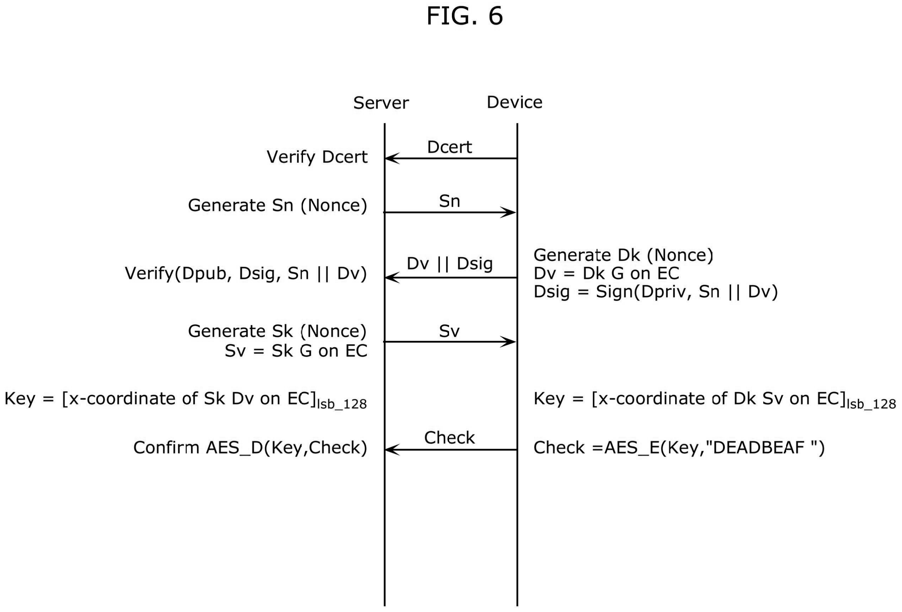

   FIG. 6 is a diagram showing an example of a one-way authentication protocol according to Embodiment 1.
[FIG. 7]

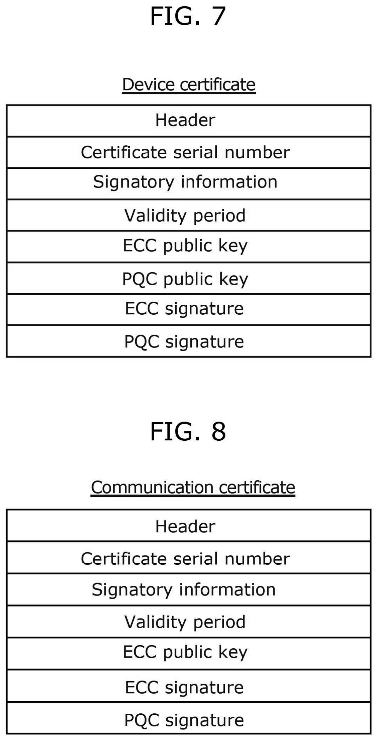

   FIG. 7 is a diagram showing the data structure of the device certificate according to a variation of Embodiment 1.
[FIG. 8]
   FIG. 8 is a diagram showing the data structure of the communication certificate according to a variation of Embodiment 1.
[FIG. 9]

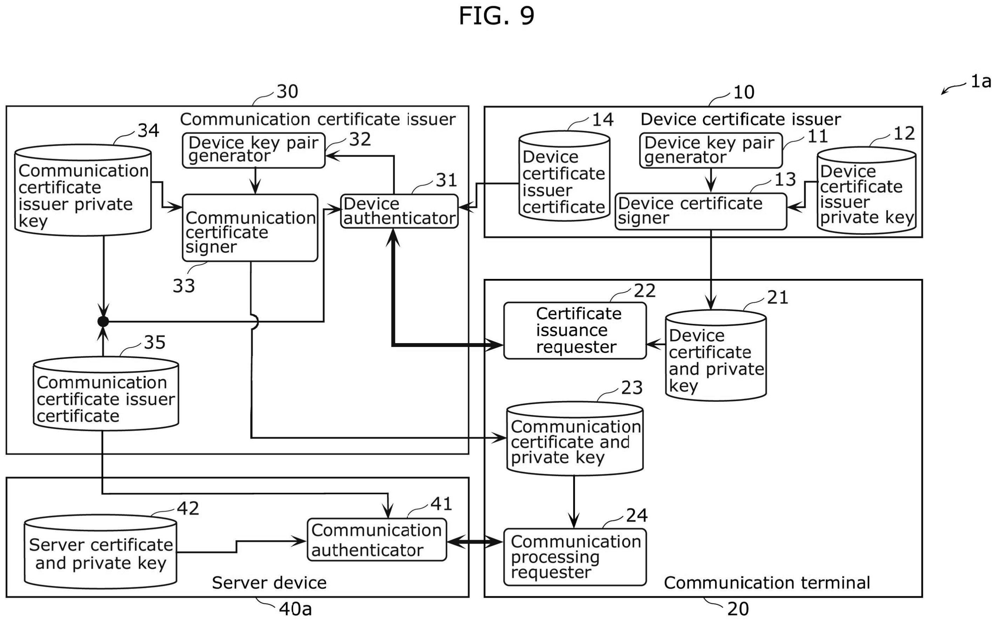

   FIG. 9 is a block diagram showing the functional configuration of the communication system according to Embodiment 2.
[FIG. 10]

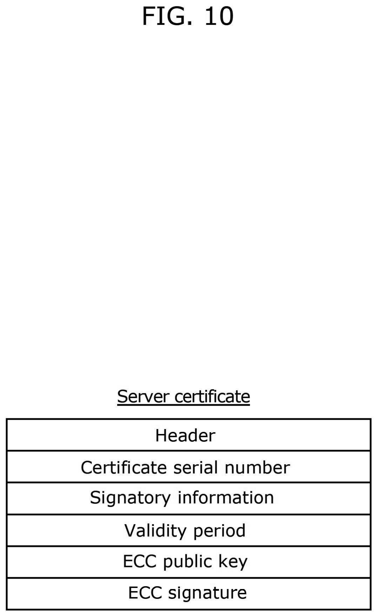

   FIG. 10 is a diagram showing the data structure of the server certificate according to Embodiment 2.
[FIG. 11]

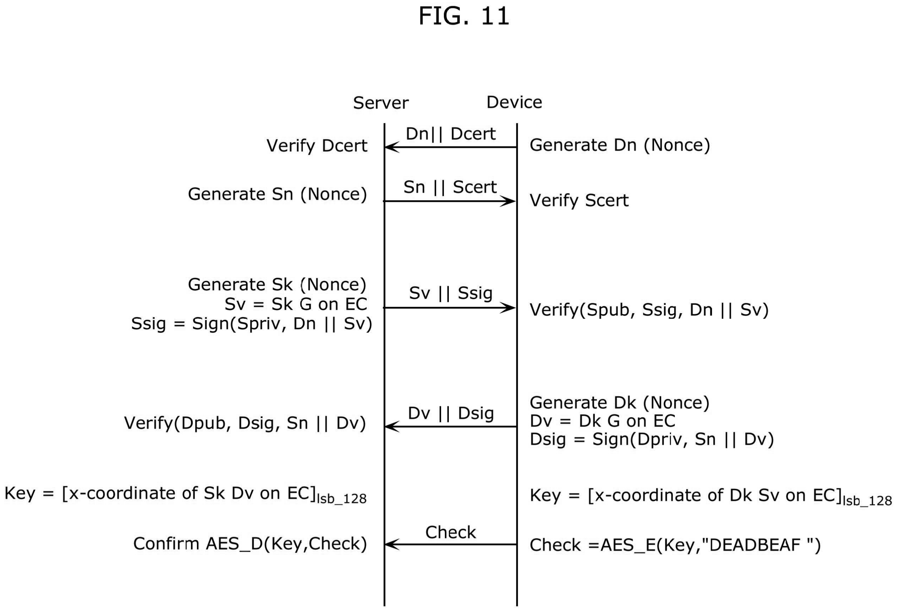

   FIG. 11 is a diagram showing an example of the bi-directional authentication protocol according to Embodiment 2.
[FIG. 12]

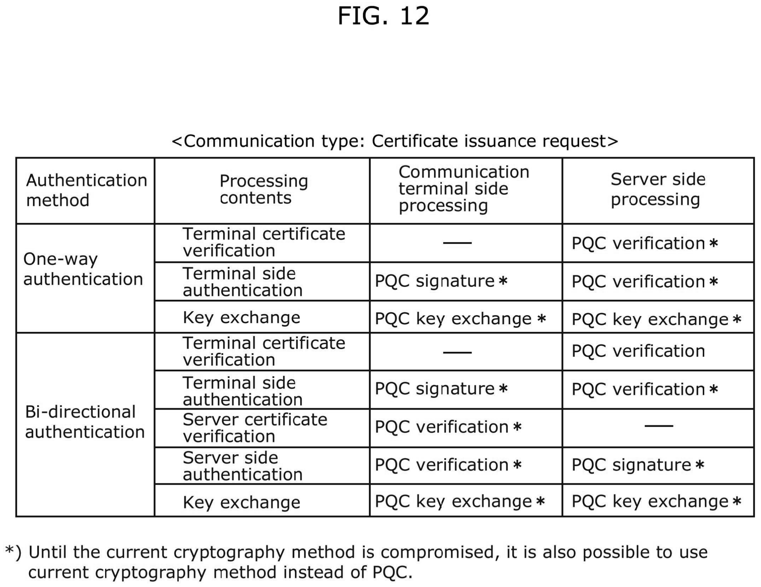

   FIG. 12 is a diagram showing a combination of cryptography methods used when a certificate issuance is requested.
[FIG. 13]

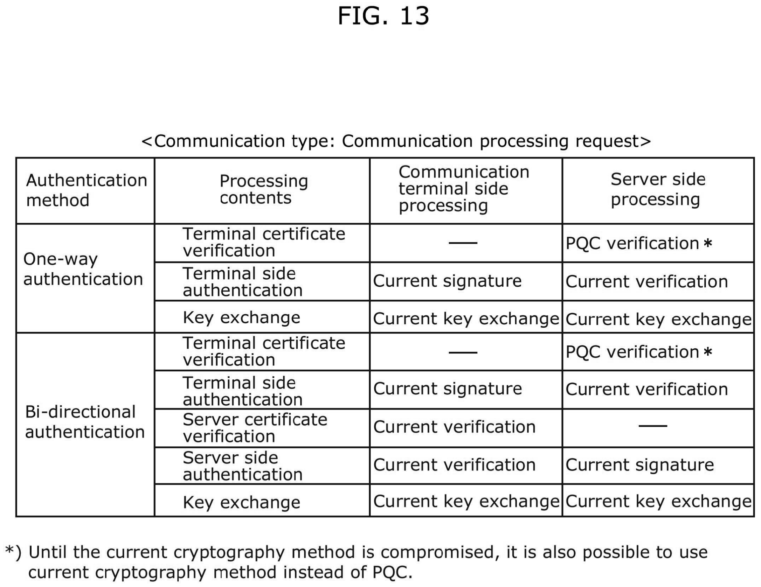

   FIG. 13 is a diagram showing a combination of cryptography methods used when communication processing is requested.
[FIG. 14]

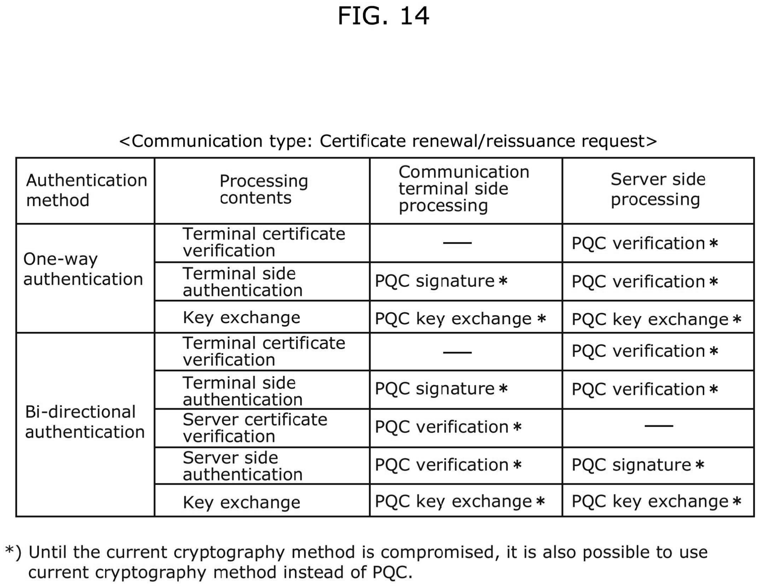

   FIG. 14 is a diagram showing a combination of cryptography methods used when certificate renewal or reissuance processing is requested.

### [Description of Embodiments]

### (Circumstances Leading to the Present Disclosure)

As described in "Technical Problem", there is an increasing number of cases where IoT devices and the like use two types of certificates when communicating with other devices. Examples of the two types of certificates include, for example, a certificate for checking (e.g., certifying) that it is a legitimate device, and a certificate for use in authentication in everyday communications. Such a certificate includes information such as a public key, a signature.

Currently, RSA cryptography, Elliptic Curve Cryptography (ECC), and the like are widely used as public key cryptography. In the following, RSA cryptography, Elliptic Curve cryptography, and the like are also described as current cryptography. Elliptic Curve cryptography is also referred to as elliptic cryptography.

The security of current cryptography is based on, for example, the discrete logarithm problem and prime factorization. Current cryptography has a relatively short processing time and can be processed in a short time, but there is a concern that it will be decoded if a quantum computer is realized. That is, the security system using current cryptography may become unsafe if a quantum computer is realized. Therefore, use of post quantum cryptography (PQC) such as lattice cryptography, which is a cryptography method that cannot be decoded in polynomial time even by a quantum computer, is envisioned. Post quantum cryptography is a cryptography whose security is based on, for example, lattice problems, multivariable polynomial solution problems, and the like. Although post quantum cryptography is superior to current cryptography in terms of security, there is a concern that the processing time will be longer than current cryptography.

In this way, current cryptography and post quantum cryptography each have advantages and disadvantages, so that it is desirable to use them appropriately in accordance with the intended use and the like.

The inventors of the present application have been intensively considering communication methods and the like that can achieve both safety and convenience (efficiency) as further improvements in the case of such communication using two types of certificates using current cryptography and post quantum cryptography, and have come up with the following communication methods and the like.

It should be noted that the Matter standard is exemplified as a standard for authenticating using two types of certificates. When two types of certificates are used, for example, a certificate (device attestation certificate (DAC)) signed (issued) by either a certification authority commissioned by a standards organization (a certification authority commissioned by a standards organization and approved under Matter) (a Product Attestation Authority) or a subordinate certification authority operated by a device manufacturer (a Product Attestation Intermediate) is assigned to each individual device. The DAC is generally embedded in the device during manufacturing and is used to confirm that it is in compliance with standards. The DAC corresponds to the device certificate described below.

In addition, when two types of certificates are used, for example, a Root certificate authority (Root CA) certificate (Node Operational Certificate (NOC)) that is normally assigned to each user is assigned to the device during initial network setup. The NOC is used for authentication processing during inter-device communication. The NOC corresponds to the communication certificate described below.

In addition, the communication method according to the first aspect of the present disclosure is a communication method for a communication terminal including a storage that stores a first certificate that has been given in advance, the communication method including: performing first authentication communication with a first device by using the first certificate; obtaining a second certificate through the first authentication communication, the second certificate being different from the first certificate; and performing second authentication communication with a second device by using the second certificate that has been obtained, the second device being different from the first device, wherein the first certificate stores a first public key and a first signature each generated using a first private key cryptography method, and the second certificate stores a second public key and a second signature each generated using a second private key cryptography method different from the first private key cryptography method.

Accordingly, public keys and signatures using different private key cryptography methods are used in authentication in the first and second authentication communications. For example, since one private key cryptography method is more secure than the other private key cryptography method, the security in the communication of the communication terminal is improved. In addition, since the processing speed of the other private key cryptography method is faster than that of the one private key cryptography method, the time required for authentication can be shortened, thereby improving convenience when the user performs authentication. That is, according to the communication terminal, when communication is performed using two types of certificates, by setting the private key cryptography method appropriately, it is possible to achieve both security and convenience. Therefore, according to the communication method, further improvements can be made when communication is performed using two types of certificates.

In addition, for example, the communication method according to the second aspect is the communication method according to the first aspect, wherein the first certificate may further store a third public key and a third signature each generated using the second private key cryptography method.

Accordingly, the first certificate includes the first public key and first signature and the third public key and third signature, so that by using the appropriate one for authentication, it is possible to achieve both safety and convenience.

In addition, for example, the communication method according to the third aspect is the communication method according to the first or second aspect, wherein the second certificate may further store a fourth signature generated using the first private key cryptography method.

This enables both safety and convenience to be achieved by using one of the second signature or the fourth signature in accordance with the processing speed of the second device.

In addition, for example, the communication method according to the fourth aspect is the communication method according to any one of the first aspect to the third aspect, wherein the first private key cryptography method may be a cryptography method using a post quantum cryptography algorithm, and the second private key cryptography method may be a cryptography method different from the post quantum cryptography algorithm.

Accordingly, by using a post quantum cryptography algorithm, even if quantum computers are realized there is less risk of deciphering them. In addition, when a different cryptography from a post quantum cryptography algorithm, processing time may be shorter than that of a post quantum cryptography algorithm. Therefore, both safety and convenience can be achieved.

In addition, for example, the communication method according to the fifth aspect is the communication method according to any one of the first aspect to the fourth aspect, wherein the first certificate may have a longer validity period than the second certificate.

This allows a single first certificate to be used even when the second certificate is to be reissued, and the like. Compared with the case where the validity period of the first certificate is short and many renewals are required, it is possible to reduce the time and effort of the renewal. Therefore, convenience can be further improved.

In addition, the communication terminal according to the sixth aspect of the present disclosure is a communication terminal including: a storage that stores a first certificate that has been given to the communication terminal in advance; a first authentication communicator that performs first authentication communication with a first device by using the first certificate; an obtainer that obtains a second certificate through the first authentication communication, the second certificate being different from the first certificate; and a second authentication communicator that performs second authentication communication with a second device by using the second certificate that has been obtained, the second device being different from the first device, wherein the first certificate stores a first public key and a first signature each generated using a first private key cryptography method, and the second certificate stores a second public key and a second signature each generated using a second private key cryptography method different from the first private key cryptography method.

This provides the same effect as that of the communication method described above.

In addition, for example, the communication terminal according to the seventh aspect is the communication terminal according to the sixth aspect, wherein the first certificate may further store a third public key and a third signature each generated using the second private key cryptography method.

Accordingly, the first certificate includes the first public key and first signature and the third public key and third signature, so that by using the appropriate one for authentication, it is possible to achieve both safety and convenience.

In addition, the communication system according to the eighth aspect of the present disclosure includes the communication terminal according to the sixth aspect or the seventh aspect, and the first device that, when one of the first private key cryptography method or the second private key cryptography method becomes compromised, performs the first authentication communication using a public key and a signature of the other of the first private key cryptography method or the second private key cryptography method.

This allows for the use of a private key cryptography method that is not compromised, so that security can be further improved.

In addition, for example, the communication system according to the ninth aspect is the communication system according to the eighth aspect, wherein when the second private key cryptography method becomes compromised during a period during which the first authentication communication is performed using the third public key and the third signature each generated using the second private key cryptography method, the first device may switch the public key and the signature used for the first authentication communication from the third public key and the third signature to the first public key and the first signature, and the second authentication communicator may use the second public key and the second signature as a public key and a signature used for the second authentication communication for the second authentication communication before and after the second private key cryptography method has become compromised.

Accordingly, when the secret key cryptography method that has been used becomes compromised, it is possible to switch to the secret key cryptography method that has not been compromised, thereby further improving security.

It should be noted that these general or specific aspects may be implemented in systems, methods, integrated circuits, computer programs, or non-temporary recording media such as a computer-readable CD-ROM, or may be implemented in any combination of systems, methods, integrated circuits, computer programs, or recording media. The program may be stored in advance on a recording medium, or may be supplied to the recording medium via a wide area communication network including the Internet or the like.

Hereinafter, the embodiments and the like will be described in detail with reference to the drawings.

It should be noted that all of the embodiments and the like described below show comprehensive or specific examples. The numerical values, shapes, components, arrangement positions and connection forms of the components, steps, order of steps, and the like shown in the following embodiments are merely examples and are not intended to be limiting the present disclosure. In addition, among the components in the following embodiments, components not described in the independent claims are described as arbitrary components.

In addition, each diagram is a schematic diagram and is not necessarily exactly illustrated. Therefore, for example, scales and the like in each drawing do not necessarily match. In addition, in each drawing, the same reference numerals are assigned to substantially the same configurations, and duplicate descriptions will be omitted or simplified.

In addition, in the present specification, numerical values and numerical ranges are not expressions that represent exact meanings only, but expressions that mean that they also include substantially equivalent ranges, such as a difference of about several percent (or about 10%).

In addition, in the present specification, ordinals such as "first" and "second" do not mean the number or order of components unless otherwise stated, and are used to avoid confusion and distinguish between similar components.

### [Embodiment 1]

Hereinafter, the communication system according to the present embodiment will be described with reference to FIG. 1 to FIG. 6.

### [1-1. Configuration of communication system]

First, the configuration of the communication system according to the present embodiment will be described with reference to FIG.1 to FIG. 4. FIG. 1 is a block diagram showing the functional configuration of communication system 1 according to the present embodiment. In FIG. 1, some configurations such as a communication circuit (communication module) are omitted. It should be noted that in the following, an example in which elliptic curve cryptography (ECC) is used as the current cryptography will be described.

As shown in FIG. 1, communication system 1 includes device certificate issuer 10, communication terminal 20, communication certificate issuer 30, and server device 40.

Device certificate issuer 10 issues a device certificate, which is a certificate for verifying (for example, certifying) that communication terminal 20 is a legitimate device. Device certificate issuer 10 is an institution provided outside the manufacturer of communication terminal 20, and distributes the device certificate to the manufacturer. The information processing apparatus held by device certificate issuer 10 (hereinafter also referred to as device certificate issuer 10) includes device key pair generator 11, first storage 12, device certificate signer 13, and second storage 14. Device certificate issuer 10 (information processing apparatus) includes a central processing unit (CPU), a memory, and the like, and the CPU executes programs stored in the memory, thereby realizing each function included in device certificate issuer 10. It should be noted that device certificate issuer 10 is a different institution (different apparatus) from communication certificate issuer 30.

Device key pair generator 11 generates a key pair for communication between communication terminal 20 and communication certificate issuer 30. In the present embodiment, device key pair generator 11 generates a PQC private key and a PQC public key paired with the PQC private key.

First storage 12 is a storage apparatus that stores the device certificate issuer private key (hereinafter also referred to as the first private key), which is the private key used when device certificate issuer 10 applies a signature (digital signature). First storage 12 is realized by a hard disk, a semiconductor memory, or the like, but is not limited thereto. First storage 12 is an example of a storage.

By using a private key held by device certificate issuer 10, device certificate signer 13 signs a public key (here, a PQC public key) paired with the private key. Device certificate signer 13 hashes the data of the PQC public key from the header included in the device certificate (see FIG. 2 shown in the next paragraph), and signs (generates a signature value for) the hash value using the private key (for example, using RSA cryptography or elliptical cryptography).

FIG. 2 is a diagram showing the data structure of the device certificate according to the present embodiment. The device certificate is a digital certificate and is an example of the first certificate.

As shown in FIG. 2, the device certificate includes a header, a certificate serial number, signatory information, a validity period, a PQC public key, and a PQC signature.

The header stores header information such as the format version of the device certificate.

The certificate serial number stores a number to identify the device certificate.

The signatory information stores information about the institution that signed the device certificate, that is, issued the device certificate. The signatory information includes, for example, information indicating the certificate authority that issued the device certificate.

The validity period indicates a period during which the device certificate can be used with validity. The validity period of the device certificate is longer than the validity period of the communication certificate, which will be described later. The validity period may be set, for example, in accordance with a product life assumed in communication terminal 20. In addition, for example, the validity period may not be set. The fact that the validity period is not set is also included in that the validity period is longer than the validity period of the communication certificate.

The PQC public key stores the PQC public key generated by device key pair generator 11. The PQC public key is an example of the first public key using the first private key cryptography method (here, a cryptography method using post quantum cryptography). In addition, the first private key cryptography method here is a cryptography method that requires longer processing times for processing in a processing apparatus (for example, communication terminal 20 or server device 40) than the second private key cryptography method using the current cryptography described later.

The PQC signature stores the signature (signature value) generated by device certificate signer 13. The PQC signature is an example of the first signature.

Regarding such device certificates, a different certificate is given to each communication terminal 20 when the communication terminal 20 is manufactured. The device certificate provided is stored in third storage 21 of that communication terminal 20. That is, the device certificate is stored in third storage 21 when communication terminal 20 is shipped from the factory. In addition, the device certificate is stored in third storage 21 when the user purchases communication terminal 20, and it can also be said that it is stored in third storage 21 when the user starts using communication terminal 20.

The device certificate is used to confirm that communication terminal 20 is correctly manufactured when the user performs initial registration of communication terminal 20 after the user purchased communication terminal 20. In other words, the device certificate is not used for everyday communication between communication terminal 20 and server device 40. In addition, when the device certificate is invalidated, communication terminal 20 cannot be used, so it is not normally expected that it will be invalidated. For example, the device certificate is prohibited from being unable to be used when communication terminal 20 is authenticated in communication certificate issuer 30. In addition, the device certificate is set so that it cannot be reissued. For example, the reissuance of the device certificate is prohibited in device certificate issuer 10.

Device certificate issuer 10 signs the device certificate and stores the information in communication terminal 20 together with the key pair.

Referring again to FIG. 1, second storage 14 is a storage apparatus that stores a device certificate issuer certificate including a public key that is paired with the first private key held by device certificate issuer 10. Second storage 14 is realized by a hard disk, a semiconductor memory, and the like, but is not limited thereto.

FIG. 3 is a diagram showing the data structure of the issuer certificate according to the present embodiment. As the issuer certificate, there are the device certificate issuer certificate and the communication certificate issuer certificate, but both may have the data structure shown in FIG. 3.

As shown in FIG. 3, the issuer certificate includes a header, a certificate serial number, signatory information, a validity period, an ECC public key, a PQC public key, an ECC signature, and a PQC signature.

The header stores header information such as the format version of the issuer certificate.

The certificate serial number stores a number to identify the issuer certificate.

The signatory information stores information about the institution that signed the device certificate, that is, issued the device certificate. The signatory information includes, for example, information indicating the certificate authority that issued the device certificate.

The validity period indicates a period during which the issuer certificate can be used with validity.

The ECC public key stores the generated ECC public key.

The PQC public key stores the generated PQC public key.

The ECC signature stores the signature (signature value) generated including the ECC public key.

The PQC signature stores the signature (signature value) generated including the PQC public key.

Such issuer certificates are used for the first authentication communication between communication terminal 20 and communication certificate issuer 30 and for the second authentication communication between communication terminal 20 and server device 40. Specifically, in the first authentication communication, a device certificate issuer certificate is used, and in the second authentication communication, a communication certificate issuer certificate is used.

Referring again to FIG. 1, communication terminal 20 is a home appliance device (so-called IoT home appliance) that includes a communication function and is capable of being connected to the Internet, and may be an audio visual (AV) device, a white goods appliance, or the like. Communication terminal 20 includes third storage 21, certificate issuance requester 22, fourth storage 23, and communication processing requester 24. Communication terminal 20 includes a CPU, a memory, and the like, and the CPU executes the programs stored in the memory, thereby realizing the functions of communication terminal 20.

Third storage 21 is a storage apparatus that stores the device certificate and private key that have been assigned to communication terminal 20 in advance (for example, at the time of manufacture). The private key is a private key that is paired with the public key contained in the device certificate. Third storage 21 is realized by a hard disk, a semiconductor memory, or the like, but is not limited thereto.

It should be noted that the private key may be stored in a secure storage area in third storage 21. The secure storage area is, for example, a storage area that is built into an integrated circuit (IC) included in communication terminal 20, and is connected to a secure zone including a mechanism to prevent unauthorized access from external entities. The secure zone is a highly reliable arithmetic processing unit with little possibility of being hacked. It should be noted that the private key is not limited to being stored in a secure storage area, and may be embedded in the IC with hardwired logic.

Certificate issuance requester 22 executes processes relating to issuing a communication certificate. Certificate issuance requester 22 uses the device certificate to carry out authentication communication (first authentication communication) with the device (first device) included in communication certificate issuer 30. Certificate issuance requester 22 is an example of the first authentication communicator.

Fourth storage 23 is a storage apparatus for storing a communication certificate, which is a certificate used when communication terminal 20 communicates with server device 40, and a private key. When the user purchases communication terminal 20, fourth storage 23 does not store the communication certificate and private key, and after the first authentication communication is completed, the communication certificate and private key are issued by communication certificate issuer 30. Fourth storage 23 is realized by a hard disk, a semiconductor memory, or the like, but is not limited thereto. Fourth storage 23 functions as an obtainer that obtains (for example, receives) a communication certificate from communication certificate issuer 30 through the first authentication communication.

FIG. 4 is a diagram showing the data structure of the communication certificate according to the present embodiment. The communication certificate is a digital certificate, and is an example of the second certificate.

As shown in FIG. 4, the communication certificate includes a header, a certificate serial number, signatory information, a validity period, an ECC public key, and an ECC signature.

The header stores header information such as the format version of the communication certificate.

The certificate serial number stores a number to identify the communication certificate.

The signatory information stores information about the institution that signed the communication certificate, that is, issued the communication certificate. The signatory information includes, for example, information indicating a device (for example, an app) that issued the communication certificate.

The validity period indicates a period during which the communication certificate can be used with validity. The validity period of the communication certificate is shorter than the validity period of the device certificate. For example, the validity period is set to a period shorter than the expected product lifetime in communication terminal 20, and may be set, for example, in a number of days, months, or years.

The ECC public key generated by device key pair generator 32 is stored in the ECC public key. The ECC public key is an example of a second public key using a second private key cryptography method (here, a cryptography method using an elliptic cryptography, which is an example of the current cryptography methods) which is a cryptography method that uses a different cryptography than the post quantum cryptography). In addition, the second private key cryptography method here is a cryptography method which has a shorter processing time when processed by the processing apparatus (for example, communication terminal 20 or server device 40) than the first private key cryptography method described above.

The ECC signature stores the signature (signature value) generated by communication certificate signer 33. The ECC signature is an example of the second signature.

Such a communication certificate is a certificate assigned to communication terminal 20 after it is confirmed that communication terminal 20 is a legitimate device using the device certificate. The assigned communication certificate is stored in fourth storage 23 of communication terminal 20. For example, the communication certificate is stored in fourth storage 23 when the device is registered. It can also be said that the communication certificate is not stored in fourth storage 23 at the time when the user has purchased communication terminal 20 (at the time when the user is not connected to the Internet after purchasing).

In addition, a communication certificate is a certificate used daily, and the private key corresponding to this communication certificate is at a higher risk of leakage than the private key corresponding to the device certificate, so it is set to be able to be invalidated and reissued as necessary (for example, if it is leaked). In addition, the second private key cryptography method used in communication certificates also has the risk that the private key will be calculated by using a quantum computer, and in this case, invalidation and reissuance are required. Invalidating the communication certificate means that server device 40 cannot authenticate communication terminal 20 using the communication certificate, and reissuing the communication certificate means that communication certificate issuer 30 reissues the communication certificate for communication between communication terminal 20 and server device 40.

Referring again to FIG. 1, communication processing requester 24 executes authentication communication (second authentication communication) with server device 40 (an example of the second device) that is different from communication certificate issuer 30 by using the communication certificate obtained from communication certificate issuer 30 and stored by fourth storage 23. Communication processing requester 24 is an example of the second authentication communicator.

Communication certificate issuer 30 issues a communication certificate used when communication terminal 20 and server device 40 communicate in daily life. The information processing apparatus (hereinafter also referred to simply as communication certificate issuer 30) included in communication certificate issuer 30 includes device authenticator 31, device key pair generator 32, communication certificate signer 33, fifth storage 34, and sixth storage 35. Communication certificate issuer 30 (information processing apparatus) includes a CPU, a memory, and the like, and the CPU executes the programs stored in the memory, thereby realizing each function of communication certificate issuer 30.

For example, communication certificate issuer 30 may be implemented by a dedicated information processing apparatus, or may be implemented by running an app installed on an information terminal such as a smartphone owned by the user who purchased communication terminal 20. It should be noted that communication certificate issuer 30 is a different institution (different apparatus) than device certificate issuer 10.

Device authenticator 31 authenticates whether communication terminal 20 is a legitimate device based on the device certificate obtained from communication terminal 20 and the device certificate issuer certificate obtained from device certificate issuer 10. The authentication method executed by device authenticator 31 is not particularly limited, and any existing authentication method may be used. In addition, device authenticator 31 may perform authentication of communication terminal 20 through one-way authentication, or may perform authentication of communication terminal 20 through bi-directional authentication.

Device key pair generator 32 generates a key pair for communication between communication terminal 20 and server device 40. In the present embodiment, device key pair generator 32 generates an ECC private key and an ECC public key that is paired with the ECC private key.

Communication certificate signer 33 applies signature to the public key (here, the ECC public key) using the private key held by communication certificate issuer 30. Communication certificate signer 33 hashes the data of the ECC public key from the header included in the communication certificate, and signs (generates a signature value for) the hash value using the private key (for example, using RSA cryptography or elliptical cryptography).

Fifth storage 34 is a storage apparatus for storing a communication certificate issuer private key (hereinafter, also referred to as the second private key), which is a private key used when the communication certificate issuer 30 signs. Fifth storage 34 is realized by a hard disk, a semiconductor memory, or the like, but is not limited thereto.

Sixth storage 35 is a storage apparatus that stores a communication certificate issuer certificate including a public key that is paired with the private key held by communication certificate issuer 30. Sixth storage 35 is realized by a hard disk, a semiconductor memory, or the like, but is not limited thereto. The data structure of the communication certificate issuer certificate may be the same as the data structure of the issuer certificate shown in FIG. 3, and the description will be omitted.

Server device 40 is a device that communicates with communication terminal 20 using a communication certificate. Server device 40 includes communication authenticator 41. Server device 40 includes a CPU, a memory, and the like, and the CPU executes programs stored in the memory, thereby realizing each function held by server device 40.

Communication authenticator 41 performs authentication in communication with communication terminal 20 based on the communication certificate obtained from communication terminal 20 and the communication certificate issuer certificate obtained from communication certificate issuer 30. The authentication method executed by communication authenticator 41 is not particularly limited, and any existing authentication method may be used. In addition, communication authenticator 41 may perform authentication in communication with communication terminal 20 by one-way authentication, or may perform authentication in communication with communication terminal 20 by bi-directional authentication.

### [1-2. Operation of communication system]

Next, the operation of communication system 1 configured as described above will be described with reference to FIG. 5 and FIG. 6. FIG. 5 is a flow chart showing the operation (communication method) of communication system 1 according to the present embodiment. FIG. 5 shows the operation of communication terminal 20 after it has been purchased by a user. It should be noted that it is assumed that third storage 21 stores the device certificate and the private key.

As shown in FIG. 5, certificate issuance requester 22 of communication terminal 20 executes first authentication communication with communication certificate issuer 30 using the device certificate (S10). The first authentication communication is a communication for performing authentication to have communication certificate issuer 30 issue a communication certificate. In the first authentication communication, the device certificate is transmitted from communication terminal 20 to communication certificate issuer 30.

Communication certificate issuer 30 uses the obtained device certificate to authenticate whether communication terminal 20 is a legitimate device. When communication terminal 20 is authenticated to be a legitimate device, communication certificate issuer 30 issues the communication certificate and a private key (a private key of the key pair generated by device key pair generator 32) to communication terminal 20.

Next, communication terminal 20 obtains the issued communication certificate and private key from communication certificate issuer 30 (S20). The obtained communication certificate and private key are stored in fourth storage 23. Fourth storage 23 functions as an obtainer for obtaining a communication certificate and a private key.

Steps S10 and S20 are executed, for example, when the user first connects communication terminal 20 to the network after communication terminal 20 was purchased. For example, steps S10 and S20 are executed while the network connection is set.

Next, when communication processing requester 24 of communication terminal 20 communicates with server device 40, it executes a second authentication communication with server device 40 using the communication certificate (S30). The second authentication communication is a communication for communication terminal 20 to perform authentication for communication with server device 40. In the second authentication communication, the communication certificate is transmitted from communication terminal 20 to server device 40. It should be noted that in the second authentication communication, the device certificate is not transmitted.

As described above, by using the device certificate in step S10, device authenticator 31 performs authentication using the device certificate. That is, authentication for the PQC signature is performed. This authentication takes more time to process than verification of the ECC signature, but it is only used when responsiveness is not important, such as at the time of the device registration, so processing time is not particularly problematic. On the other hand, since post quantum cryptography is used, there is a low risk of being deciphered.

In addition, as described above, in step S30, by using the communication certificate, communication authenticator 41 executes authentication using the communication certificate. That is, authentication for the ECC signature is performed. This verification takes less processing time than the verification for the PQC signature, and is used when responsiveness is important, such as in daily communication, so that the processing time is shorter. Daily communication means communication that takes place at a relatively high frequency.

In this way, in the case of communications using two types of certificates, when a communication certificate is issued, a device certificate containing a PQC signature is used, and a communication certificate containing an ECC signature is used during daily communication, thereby making it possible to achieve both the security of communication using communication terminal 20 and the convenience of communication terminal 20.

In addition, in the present embodiment, one-way authentication is performed as an authentication method for the first and second authentication communications. FIG. 6 is a diagram showing an example of a one-way authentication protocol (elliptic cryptography based) according to the present embodiment. It should be noted that the one-way authentication protocol shown in FIG. 6 is known, and the explanation is simplified. In the first authentication communication, "Device" is communication terminal 20, "Sever" is communication certificate issuer 30, and in the second authentication communication, "Device" is communication terminal 20, and "Server" is server device 40. The following will be explained using the case of first authentication communication as an example.

"Dcert" shown in FIG. 6 indicates a device certificate, "Sn", "Dk", "Dv", "Sk", and "Sv" indicate random values (random numbers), "Dpriv" indicates the private key held by the Device, and "Dpub" indicates the public key that is paired with "Dpriv".

As shown in FIG. 6, certificate issuance requester 22 of communication terminal 20 transmits the device certificate to communication certificate issuer 30.

Next, device authenticator 31 of communication certificate issuer 30 verifies the signature (here, the PQC signature) of the device certificate using the public key included in the device certificate issuer certificate. For example, device authenticator 31 uses the public key included in the device certificate issuer certificate to determine whether the signature in the device certificate is correct.

Next, device authenticator 31 generates random value Sn to verify whether communication terminal 20 has a private key that is paired with the public key included in the device certificate, and transmits it to communication terminal 20.

Next, certificate issuance requester 22 generates random value Dk, multiplies random value Dk by base point G of the elliptic curve to generate random value Dv, and transmits random values Sn and Dv with a signature using the private key stored in third storage 21 to communication certificate issuer 30.

Next, device authenticator 31 uses the public key included in the device certificate to verify the information transmitted from certificate issuance requester 22 (that is, whether the signature is correct). The authentication is completed when the signature is confirmed to be correct.

Next, after the authentication confirms that communication terminal 20 has a private key that is paired with the public key included in the device certificate, device authenticator 31 generates random value Sk, multiplies random value Sk by base point G of the elliptic curve to generate random value Sv, and transmits random value Sv to communication terminal 20.

Next, the session key is exchanged in certificate issuance requester 22 and device authenticator 31. When communication certificate signer 33 transmits the communication certificate and private key to communication terminal 20, the session key is used.

It should be noted that in the second authentication communication, a communication certificate is used as "Dcert."

### (Variation of embodiment 1)

In the following, each certificate used in the communication system according to the present variation will be described with reference to FIG. 7 and FIG. 8. It should be noted that in the following, differences from Embodiment 1 will be mainly explained, and descriptions of the same content as or similar content to Embodiment 1 will be omitted or simplified. It should be noted that the functional configuration of the communication system according to the present variation may be the same as that of communication system 1 shown in FIG. 1, and the following description will be made using the reference numerals used in communication system 1 according to Embodiment 1.

FIG. 7 is a diagram showing the data structure of the device certificate according to the present variation.

As shown in FIG. 7, the device certificate according to the present variation includes the ECC public key and the ECC signature in addition to the device certificate shown in FIG. 2. The ECC public key is an example of the third public key, and the ECC signature is an example of the third signature.

This allows device authenticator 31 to select whether to perform authentication using an ECC signature or a PQC signature when communication terminal 20 is authenticated. For example, when one of the first private key cryptography method or the second private key cryptography method is compromised, device authenticator 31 authenticates communication terminal 20 using a public key and signature each generated using the other private key cryptography method (a private key cryptography method that is not compromised) out of the first private key cryptography method and the second private key cryptography method.

If the second private key cryptography method is compromised during the period during which communication terminal 20 is authenticated using the third public key and the third signature each generated using the second private key cryptography method, device authenticator 31 may switch the public key and signature used for the authentication from the third public key and the third signature to the first public key and the first signature. For example, device authenticator 31 may perform the authentication using an ECC signature during the period until the current cryptography method is compromised. Whether the method has been compromised may be determined based on the contents of guidelines of a public institution (for example, in Japan, the information-technology promotion organization (IPA)), or it may be determined by the manufacturer of communication terminal 20, or the like.

It should be noted that communication processing requester 24 uses a common second public key and second signature as the public key and signature used for the second authentication communication before and after the second private key cryptography method is compromised. That is, communication processing requester 24 uses the second public key and the second signature regardless of whether the second private key cryptography method is compromised.

It should be noted that the ECC private key and the ECC public key that is paired with the ECC private key are generated by device key pair generator 11. That is, device key pair generator 11 generates two sets of key pairs.

FIG. 8 is a diagram showing the data structure of the communication certificate according to the present variation.

As shown in FIG. 8, the communication certificate according to the present variation includes a PQC signature in addition to the communication certificate shown in FIG. 4. The PQC signature is an example of the fourth signature.

This allows communication authenticator 41 to select whether to perform authentication using an ECC signature or a PQC signature when verifying communication terminal 20. Server device 40 often has a faster processing speed (more computing resources) than communication terminal 20 and the like. Server device 40 may, for example, determine whether to use an ECC signature or a PQC signature, in accordance with the processing speed of the apparatus itself. For example, when the processing speed of the apparatus itself is greater than or equal to a predetermined value, server device 40 may perform authentication using a PQC signature, and when the processing speed of the apparatus itself is less than the predetermined value, server device 40 may perform authentication using an ECC signature. For example, if the processing speed of the apparatus itself is greater than or equal to a predetermined value, server device 40 may perform authentication using a PQC signature instead of an ECC signature.

In this way, when both the ECC signature and the PQC signature are included in the communication certificate, communication authenticator 41 may perform authentication using a signature determined in accordance with the response speed of the apparatus itself.

### [Embodiment 2]

Hereinafter, the communication system according to the present embodiment will be described with reference to FIG. 9 to FIG. 11. It should be noted that in the following, differences from Embodiment 1 will be mainly explained, and descriptions of the same content as or similar content to Embodiment 1 will be omitted or simplified.

### [2-1. Configuration of communication system]

First, the configuration of the communication system according to the present embodiment will be described with reference to FIG. 9 and FIG. 10. FIG. 9 is a block diagram showing the functional configuration of communication system 1a according to the present embodiment. Communication system 1a according to the present embodiment differs from communication system 1 according to Embodiment 1 in that bi-directional authentication is performed as authentication between apparatuses.

As shown in FIG. 9, communication system 1a includes server device 40a in place of server device 40 of communication system 1. In addition to communication authenticator 41 according to Embodiment 1, server device 40a includes seventh storage 42 that stores a server certificate and a private key. The server certificate and the private key stored in seventh storage 42 are used for mutual authentication between communication terminal 20 and server device 40a. It should be noted that the private key stored in seventh storage 42 is a private key that is paired with the public key included in the server certificate (for example, the ECC public key in the example of FIG. 10).

FIG. 10 is a diagram showing the data structure of a server certificate according to the present embodiment.

As shown in FIG. 10, the server certificate includes a header, a certificate serial number, signatory information, a validity period, an ECC public key, and an ECC signature. In the case of bi-directional authentication, communication terminal 20 uses the server certificate to authenticate whether server device 40a is a legitimate device. Communication terminal 20 often has a slower processing speed than server device 40a, and from the viewpoint of convenience, the server certificate includes only the ECC signature, out of the ECC signature and the PQC signature.

The header stores header information such as the format version of the server certificate.

The certificate serial number stores a number to identify the server certificate.

The signatory information stores information about the institution that signed the server certificate, that is, issued the server certificate. The signatory information includes, for example, information indicating the certificate authority that issued the server certificate.

The validity period indicates a period during which the server certificate can be used with validity.

The ECC public key stores an ECC public key that is paired with the private key stored in seventh storage 42.

The ECC signature stores the signature (signature value) granted using the private key owned by the institution that issued the server certificate.

Such a server certificate is used when communication terminal 20 and server device 40a perform mutual authentication.

Referring again to FIG. 9, device authenticator 31 of communication certificate issuer 30 obtains the second private key from fifth storage 34 and the communication certificate issuer certificate from sixth storage 35.

### [2-2. Operation of communication system]

Next, the operation of communication system 1a configured as above will be described with reference to FIG. 11. It should be noted that the operation of communication system 1a may be the same as that shown in FIG. 5, and the bi-directional authentication will be described below.

FIG. 11 is a flow chart showing the operation (communication method) of communication system 1a according to the present embodiment. FIG. 11 is a diagram showing an example of a bi-directional authentication protocol (elliptic cryptography based) according to the present embodiment. It should be noted that the bi-directional authentication protocol shown in FIG. 11 is known, and the explanation is simplified. In addition, in the following, the processes that differ from the one-way authentication shown in FIG. 6 will be mainly explained below.

In the first authentication communication, "Device" is communication terminal 20, "Sever" is communication certificate issuer 30, and in the second authentication communication, "Device" is communication terminal 20, and "Sever" is server device 40a. In the following, the case of the first authentication communication will be described as an example. In addition, "Scert" shown in FIG. 11 indicates a communication certificate issuer certificate.

As shown in FIG. 11, certificate issuance requester 22 of communication terminal 20 generates random value Dn and transmits generated random value Dn and the device certificate (see FIG. 2 or FIG. 7) to communication certificate issuer 30.

Next, device authenticator 31 of communication certificate issuer 30 uses the public key included in the device certificate issuer certificate to verify whether the signature (for example, PQC signature) of the device certificate is correct. In addition, device authenticator 31 generates random value Sn and transmits generated random value Sn and the communication certificate issuer certificate (see, for example, FIG. 3) to communication terminal 20.

Next, certificate issuance requester 22 uses the public key that is paired with the second private key to verify whether the signature (for example, the PQC signature) of the communication certificate issuer certificate is correct.

Next, device authenticator 31 generates random value Sk, multiplies random value Sk by base point G of the elliptic curve to generate random value Sv, and sends random value Dn and Sv with a signature using the second private key stored in fifth storage 34 to communication terminal 20.

Next, certificate issuance requester 22 uses the public key that is paired with the second private key to verify whether the signature (for example, the PQC signature) obtained from device authenticator 31 is correct. This allows for acknowledgement whether communication certificate issuer 30 has a second private key that is paired with the public key. That is, certificate issuance requester 22 checks whether communication certificate issuer 30 is the correct institution.

Next, certificate issuance requester 22 generates random value Dk, multiplies random value Dk by base point G of the elliptic curve to generate random value Dv, and sends random values Sn and Dv with a signature using the private key stored in third storage 21 to communication certificate issuer 30.

Next, device authenticator 31 uses the public key included in the device certificate issuer certificate to verify whether the signature (for example, the PQC signature) obtained from certificate issuance requester 22 is correct. This allows it to be seen whether communication terminal 20 has a private key issued by device certificate issuer 10 (a private key that is paired with the public key of the device certificate). That is, communication certificate issuer 30 checks whether communication terminal 20 is a correct terminal.

Next, if each authentication is correct, the session key is exchanged in certificate issuance requester 22 and device authenticator 31. When communication certificate signer 33 sends the communication certificate and private key to communication terminal 20, the session key is used.

### (Regarding combination of cryptography methods)

Next, a combination of cryptography methods in the communication system configured as in the embodiments and the like described above will be described with reference to FIG. 12 to FIG. 14. FIG. 12 is a diagram showing a combination of cryptography methods used when a certificate issuance is requested. The authentication methods include one-way authentication and bi-directional authentication, and the processing contents include terminal certificate verification, terminal side verification, key exchange, server certificate verification, and server side verification. It should be noted that the terminal certificate verification refers to the verification of the device certificate held by communication terminal 20.

As shown in FIG. 12, PQC-based processing is executed in each of the communication terminal side processing (processing executed by communication terminal 20) and server side processing (processing executed by server device 40a). For example, when the processing content is terminal certificate verification, server device 40a performs PQC verification, which performs verification of the PQC signature. In addition, when the processing content is terminal side authentication, communication terminal 20 executes processing for assigning a PQC signature, and server device 40a performs PQC verification, which performs verification of the PQC signature given by communication terminal 20. In addition, when the processing content is key exchange, both communication terminal 20 and server device 40a perform processing for exchanging the PQC keys. In addition, when the processing content is server certificate authentication, communication terminal 20 performs PQC verification on the PQC signature of the server certificate obtained from server device 40a. In addition, when the processing content is server side authentication, server device 40a executes processing for assigning a PQC signature, and communication terminal 20 executes PQC verification on the PQC signature given by server device 40a.

It should be noted that in FIG. 12, where "*" is indicated, the current cryptography method (e.g., ECC) can also be used instead of PQC until the current cryptography method is compromised. The same applies to FIG. 13 and FIG. 14.

FIG. 13 is a diagram showing a combination of cryptography methods used when communication processing is requested. In FIG. 13, when the current cryptography method is used, "current" is written. For example, when the signature is applied using the current cryptography method, "current signature" is written.

As shown in FIG. 13, the current cryptography method is mainly used in daily communication between communication terminal 20 and server device 40a. It should be noted that when the processing content is terminal certificate verification, PQC verification is performed on server device 40a. This indicates that PQC verification is performed when server device 40a has relatively abundant computing resources and the processing speed is expected to be faster than a predetermined value. For example, current verification may be performed on server device 40a until the current cryptography method is compromised.

FIG. 14 is a diagram showing a combination of cryptography methods used when a certificate renewal or reissue process is requested.

As shown in FIG. 14, when the communication certificate is renewed or reissued, verification and key exchange using PQC are performed. In the case of a renewal, the processing may be executed at a timing such as a timing when no device operation is performed, when a processing time may be required.

### [Other Embodiments]

Although the communication system and the like according to one or more aspects have been described above based on the embodiments and the like, the present disclosure is not limited to the present embodiments and the like. Forms obtained by applying various modifications that a person skilled in the art can conceive to the embodiments and the like, and forms realized by combining the components in different embodiments without departing from the spirit of the present disclosure may also be included in the present disclosure.

For example, in the embodiments and the like described above, the case where the private key stored in third storage 21 (the first private key generated by device key pair generator 11) and the private key stored in fourth storage 23 are different private keys has been described, but this is not limited thereto, and the two private keys may be common private keys.

In addition, in the embodiments and the like described above, an example in which communication terminal 20 communicates with server device 40a by using two types of certificates has been described, but the number of certificates used is not limited to two types, and three or more types may be used.

In addition, in the embodiments and the like described above, each component may be made of dedicated hardware or may be realized by executing a software program suitable for each component. Each component may be realized by a program executor such as a CPU or a processor, reading out and executing software programs recorded on a recording medium such as a hard disk or a semiconductor memory.

In addition, the order in which each step in the flow chart is performed is for illustrative purposes to specifically explain the present disclosure, and may be in an order other than the above. In addition, some of the above steps may be executed simultaneously (in parallel) with other steps, or some of the above steps may not be executed.

In addition, division of functional blocks in a block diagram is an example, and a plurality of functional blocks may be realized as one functional block, one functional block may be divided into a plurality of functional blocks, or some functions may be transferred to other functional blocks. In addition, functions of a plurality of functional blocks with similar functions may be processed in parallel or time division by a single hardware or software.

In addition, the communication terminal according to the embodiments and the like described above may be implemented as a single apparatus or may be implemented by a plurality of apparatuses. When a communication terminal is implemented by a plurality of apparatuses, each component included in the communication terminal may be allocated to a plurality of apparatuses in any manner. When the communication terminal is implemented with a plurality of apparatuses, the communication method between the plurality of apparatuses is not particularly limited, and may be wireless or wired communication. In addition, wireless communication and wired communication may be combined between the apparatuses.

In addition, each component explained in the embodiments and the like described above may be implemented as software, or typically as an LSI, which is an integrated circuit. These may be individually converted to one chip, or may be converted to one chip so as to include part or all of them. Although the LSI is used here, due to differences in integration, it is sometimes referred to as an IC, a system LSI, a super LSI, or an ultra LSI. In addition, the circuit integration method is not limited to LSIs, but may be implemented using a dedicated circuit (a general-purpose circuit that executes a dedicated program) or a general-purpose processor. A field programmable gate array (FPGA) that is programmable after LSI manufacturing or a reconfigurable processor that allows the connection or settings of circuit cells inside the LSI may be used. Furthermore, if an integrated circuit technology that replaces an LSI appears due to advances in semiconductor technology or another technology derived therefrom, it is natural that the components may be integrated using that technology.

A system LSI is an ultra-multifunctional LSI manufactured by integrating a plurality of processing units on a single chip, and specifically, it is a computer system that includes a microprocessor, a read only memory (ROM), a random access memory (RAM), and the like. The ROM stores a computer program. The system LSI achieves its functionality by operating the microprocessor according to a computer program.

In addition, an aspect of the present disclosure may be a computer program for causing a computer to execute each of the distinctive steps included in the communication methods shown in any of FIG. 5, FIG. 6 and FIG. 11.

In addition, for example, the program may be a program for causing a computer to execute. In addition, one aspect of the present disclosure may be a computer-readable non-transitory recording medium having recorded such a program thereon. For example, such a program may be recorded on a recording medium and distributed or circulated. For example, by installing a distributed program on another device with a processor and having the processor execute the program, it is possible to cause the device to perform each processing described above.

### [Industrial Applicability]

The present disclosure is useful for communication methods and the like in which communication is carried out using two certificates.

### [Reference Signs List]

1, 1a Communication system
10 Device certificate issuer
11, 32 Device key pair generator
12 First storage (Storage)
13 Device certificate signer
14 Second storage
20 Communication terminal
21 Third storage
22 Certificate issuance requester (First authentication communicator)
23 Fourth storage (Obtainer)
24 Communication processing requester (Second authentication communicator)
30 Communication certificate issuer
31 Device authenticator
33 Communication certificate signer
34 Fifth storage
35 Sixth storage
40, 40a Server device
41 Communication authenticator
42 Seventh storage

## Claims

1. A communication method for a communication terminal including a storage that stores a first certificate that has been given in advance, the communication method comprising:
performing first authentication communication with a first device by using the first certificate;
obtaining a second certificate through the first authentication communication, the second certificate being different from the first certificate; and
performing second authentication communication with a second device by using the second certificate that has been obtained, the second device being different from the first device,
wherein the first certificate stores a first public key and a first signature each generated using a first private key cryptography method, and
the second certificate stores a second public key and a second signature each generated using a second private key cryptography method different from the first private key cryptography method.

2. The communication method according to claim 1,
wherein the first certificate further stores a third public key and a third signature each generated using the second private key cryptography method.

3. The communication method according to claim 1 or 2,
wherein the second certificate further stores a fourth signature generated using the first private key cryptography method.

4. The communication method according to claim 1 or 2,
wherein the first private key cryptography method is a cryptography method using a post quantum cryptography algorithm, and
the second private key cryptography method is a cryptography method different from the post quantum cryptography algorithm.

5. The communication method according to claim 1 or 2,
wherein the first certificate has a longer validity period than the second certificate.

6. A communication terminal comprising:
a storage that stores a first certificate that has been given to the communication terminal in advance;
a first authentication communicator that performs first authentication communication with a first device by using the first certificate;
an obtainer that obtains a second certificate through the first authentication communication, the second certificate being different from the first certificate; and
a second authentication communicator that performs second authentication communication with a second device by using the second certificate that has been obtained, the second device being different from the first device,
wherein the first certificate stores a first public key and a first signature each generated using a first private key cryptography method, and
the second certificate stores a second public key and a second signature each generated using a second private key cryptography method different from the first private key cryptography method.

7. The communication terminal according to claim 6,
wherein the first certificate further stores a third public key and a third signature each generated using the second private key cryptography method.

8. A communication system comprising:
the communication terminal according to claim 7; and
the first device that, when one of the first private key cryptography method or the second private key cryptography method becomes compromised, performs the first authentication communication using a public key and a signature of an other of the first private key cryptography method or the second private key cryptography method.

9. The communication system according to claim 8,
wherein when the second private key cryptography method becomes compromised during a period during which the first authentication communication is performed using the third public key and the third signature each generated using the second private key cryptography method, the first device switches the public key and the signature used for the first authentication communication from the third public key and the third signature to the first public key and the first signature, and
the second authentication communicator uses the second public key and the second signature as a public key and a signature used for the second authentication communication for the second authentication communication before and after the second private key cryptography method has become compromised.
